# EUROPEAN PATENT SPECIFICATION

(11) **EP 0 517 759 B1**
(45) Date of publication and mention of the grant of the patent: **08.11.1995**
(21) Application number: 91904981.7
(22) Date of filing: 21.02.1991
(51) Int. Cl.: G01N 21/85, G01N 15/06

(54) **A METHOD OF MEASURING SLURRY**
METHODE ZUM MESSEN EINER AUFSCHÄUMUNG
PROCEDE DE MESURE D'UNE BOUE LIQUIDE

(30) Priority: 26.02.1990 DK 503/90
(43) Date of publication of application: 16.12.1992
(73) Proprietor: LYS & OPTIK, DK-2800 Lyngby (DK)
(72) Inventor: HANSEN, Jan, DK-2800 Lyngby (DK); NIELSEN, Hans, Ole, DK-2800 Lyngby (DK); NORTHEVED, Allan, DK-3520 Farum (DK)
(74) Representative: Siiger, Joergen
(86) International application number: DK9100053
(87) International publication number: WO9113340

(56) References cited:
- EP-A- 0 039 088
- WO-A-89/03524
- US-A- 4 040 743
- US-A- 4 201 477
- US-A- 4 299 495

## Description

### Technical Field

The invention relates to a method of continuously determining the parameters of a fluid, such as the dry-matter percentage in slurry or another industrial product, and whereby said fluid is subjected to a measuring system comprising a radiation source and a radiation detector placed opposite one another, the measuring signals being processed in an evaluation circuit, wherafter the results of the evaluation are displayed on display means.

### Background Art

A system is known for measuring parameter values of a passing fluid. The system comprises a radiation source and a radiation detector optionally in direct contact with the fluid. Means may furthermore be provided for cleaning the radiation source and the radiation detector. Such means may for instance be in form of a scraper or a jet of wash water, cf. US patent specification No. 4,896,047. Such systems are encumbered with the drawback that it is impossible to maintain clean surfaces and to clean said surfaces to the same extent each time. Accordingly, it is impossible to achieve correct measuring values.

From US patent specification No. 4 201 477 is known an apparatus for determining the parameter values of a passing fluid. The apparatus comprises a sensing head for immersion in the fluid. The sensing head has two optical windows which are placed opposite one another in a hollow space having access from both sides so as to allow the fluid to penetrate into the hollow space. The sensing head requires a cleaning of the windows followed by a calibration. The calibration consists of a calibration in an almost pure fluid followed by a calibration with a mechanical interruption of the path of radiation. After that the calibration curve can be determined, and compensation may be made by means of a computer. A disadvantage of this apparatus is that the sensing head is relatively complicated and that it requires several fluid controlling systems and a mecanical blocking of the path of radiation.

### Disclosure of Invention

The object of the invention is to provide a method solving the above problems.

The method according to the invention is characterised in that the radiation source and the radiation detector are mounted on a forked support immersible in the fluid in question. According to the invention the measuring signal may be subjected to a simultaneous/following calibration, the source and the detector being subjected to a rinsing.

The radiation used may for instance be provided by light, sound or soft isotopic radiation.

### Brief Description of Drawings

The invention is described in greater detail below with reference to the accompanying drawings, in which
Fig. 1 illustrates a known slurry measuring device comprising a radiation source and a radiation detector placed opposite one another, the radiation source and the radiation detector being cleaned by means of a rotating scraper,
Fig. 2 illustrates a second known slurry measuring device, where the scraper is inserted from the side, (the T-model),
Fig. 3 illustrates a third known slurry measuring device, where the probe is bent,
Fig. 4 illustrates a slurry measuring device according to the invention, where the surface of the radiation source and the radiation detector are cleaned by means of passing water,
Fig. 5 illustrates an example of a measuring signal produced by the slurry measuring device of Fig. 4, and
Fig. 6 illustrates an example of the electronic measuring circuit.

### Best Mode for Carrying Out the Invention

The invention refers to highly polluted fluids, such as sludge. An interest has arisen in measuring the dry-matter percentage relative to the water percentage in slurry. The measuring may for instance be carried out by measuring the damping of a suitably selected radiation light, sound or isotopic radiation over a predetermined measuring length. A problem applies, however, because the radiation source and the radiation detector are polluted on the surface with the result that the measuring signal is degraded.

According to a first system known in the art, the sludge passes a pipe 1 provided with two opposing transducers 2, 3 flushing with the inner side of said pipe 1. The inner side of the transducers 2, 3 are kept clean by means of a rotating, cylindrical scraper 4 comprising V-shaped notches. The rotation of the scraper 4 is caused by means of an outer gear wheel engaging said cylindrical, rotating scraper 4 through a slot in the pipe 1. Such a system is, however, encumbered with sealing problems. The scraper 4 may also be formed such that it is caused to rotate by the passing sludge, and then it is provided with inner fins. Alternatively, the scraper 4 can be made of an electrically conductive material and caused to rotate by means of an electromagnetic, rotating field applied from the outside by means of electromagnets 5 placed on the outside, whereby sealing problems are avoided. Permanent magnets may furthermore be embedded in the rotating scraper 4, said permanent magnets being caused to follow the rotating field. When the rotating scraper is provided with inner fins, the permanent magnets may be used for indicating the flow velocity with the result that it is possible in addition to achieve a measurement of the viscosity which may also be of interest.

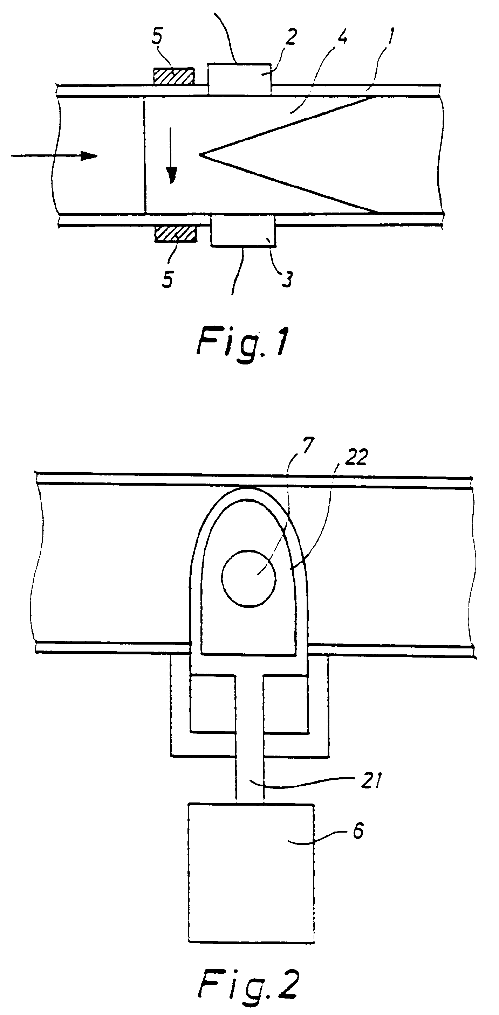

According to a second system known in the art, the so-called T-model shown in Fig. 2, the rotating scraper 22 has been inserted from the side perpendicular to said embodiment. The T-model is advantageous in facilitating the providing of a rotation by means of a motor 6. The rotating scraper 22 need only be mounted in a liquid-proof manner relative to the motor 6. The driving shaft 21 of the rotating scraper 22 extends through a housing via a liquid-proof bearing, said housing sealingly surrounding the pipe. The transducers 7, 7′ are preferably ultrasonic transducers. In addition to the cleaning function, portions of the rotating scraper or a particularly shaped member mounted thereon may be used for calibration.

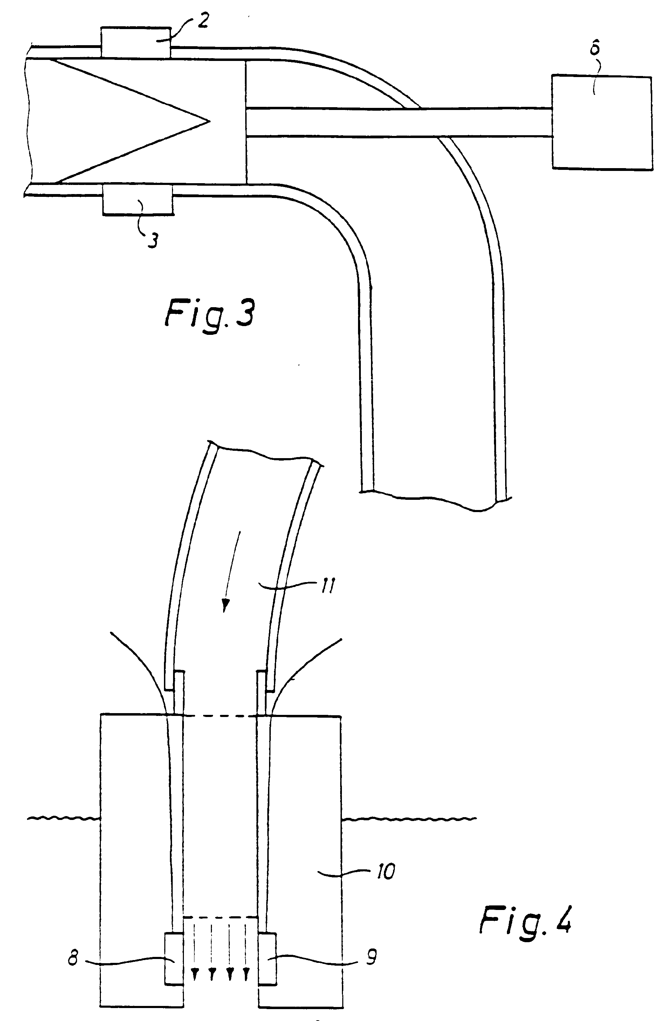

According to the invention, cf. Fig. 4, the radiation source 8 and the radiation detector 9 are mounted on a forked support 10 immersible in the fluid to be measured. Before the calibration, the detector 8 and the radiation source 9 are rinsed by means of rinsing water being fed through a channel 11 in the forked support 10. The channel 11 may optinally split up into two branch pipes, one branch pipe facing the radiation source 8 and the other branch pipe facing the radiation detector 9. The feeding hose 14 to the channel 11 is provided with a valve controlling the supply of water. The radiation source 8 is spaced approximately 10 mm from the radiation detector 9. According to the invention a reference measurement is performed, i.e. a calibration, at the end of each rinsing period, and then the actual measuring signal is compared with the reference signal. In this manner an incomplete cleaning has automatically been taken into account. The rinsing channel fills the entire space between the detector 9 and the source 8 with the result that the rinsing fluid functions as a reference fluid because said rinsing fluid fills the entire volume between the radiation source 8 and the radiation detector 9.

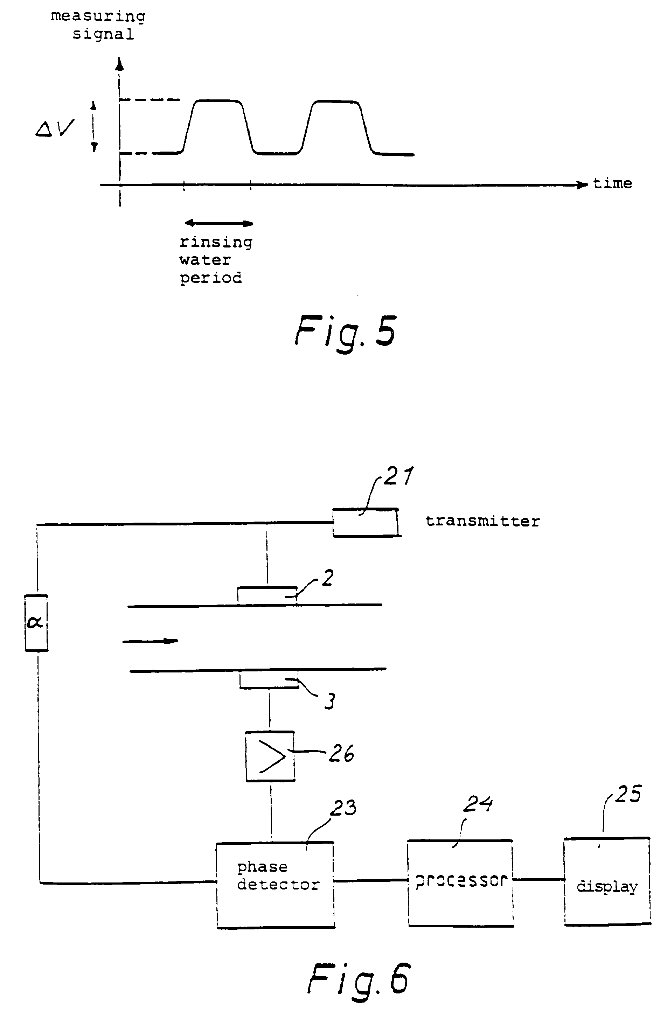

Fig. 5 illustrates an example of measuring signals.

Fig. 6 illustrates an example of the electronic circuit in question, where the transmitter 21 communicates with the transmitter-transducer 2. The signal received by the receiver-transducer 3 is transmitted to an amplifier 26 in turn transmitting said signal to an amplitude and phase detector 23. Subsequently, the signal is processed in a microprocessor circuit 24 connected to a display 25.

The radiation in question is not necessarily ultrasound. Alternatively, it may be an electromagnetic radiation, such as light or a soft isotopic radiation when heavy metals are to be measured.

It is important that the measuring value is compared with the reference value provided at the end of the cleaning process because said comparing turned out to provide sufficiently good measuring results.

The measuring method is in particular used for measuring the dry-matter percentage in sludge by means of infrared light. The method can, however, also be used for other measurings of parameter values of a fluid.

According to another embodiment, the light used is infrared and ultraviolet light. The ultraviolet light is attenuated in response to the amount of organic matter (BOD,COD). Statistically it turned out in addition, that the ratio of infrared to ultraviolet damping is related to the amount of organic matter. Accordingly, a measuring of the attenuation of ultraviolet light relative to infrared light results in the percentage of organic matter in for instance sludge.

The radiation source for emission of both ultraviolet and infrared light may for instance be a halogen or a xenon lamp. The receiving side is provided with a separate detector for infrared light and separate detector for ultraviolet light. The radiation source may be adapted to pulsed operation.

## Claims

1. A method of continuously determining the parameters of a fluid, such as the dry-meter percentage in slurry or an industrial product, said fluid is subjected to a measuring system comprising a light source and a light detector being mounted on a forked support opposite one another such that a measuring space is defined therebetween, the measuring signals being processed in an evaluation circuit, whereafter the results of the evaluation are displayed on display means, the method comprising the steps of immersing said forked support in the fluid whereafter the measuring space is subjected to a period of rinsing by means of letting a rinsing fluid enter and fill the entirety of said space via a rinsing channel whereby the end of said rinsing period is devoted to calibration at which said rinsing fluid acts as a reference fluid, whereafter, during measurement, the actual measuring signal is compared with the reference signal formed during said calibration.

2. A method as claimed in claim 1, **characterised** by the light source being an infrared light source.

3. A method as claimed in claim 1, **characterised** by the light source being an ultraviolet light source.

4. A method as claimed in claims 2 and 3, **characterised** by measuring the ratio of the transmission of ultraviolet light to infrared light so as to determine the percentage of organic matter.

5. A method as claimed in claim 2, 3 or 4, **characterised** in that the light source emitting both ultraviolet and infrared light being a halogen or xenon lamp.

6. A method as claimed in any of the preceding claims, **characterised** by using a pulsed light radiation.

## Patentansprüche

1. Verfahren zum kontinuierlichen Bestimmen der Parameter eines Fluids, wie z.B. des Trockensubstanz-Prozentsatzes in einer Aufschlämmung oder einem industriellen Produkt, wobei das Fluid einem Meßsystem ausgesetzt wird, das eine Lichtquelle und einen Lichtdetektor aufweist, die an einer gegabelten Halterung einander gegenüberliegend derart angebracht sind, daß ein Meßraum zwischen ihnen gebildet ist, wobei die Meßsignale in einer Auswertungsschaltung verarbeitet werden, woraufhin die Ergebnisse der Auswertung auf einer Anzeigeeinrichtung angezeigt werden, wobei das Verfahren die folgenden Schritte aufweist:
Eintauchen der gegabelten Halterung in das Fluid, woraufhin der Meßraum einer Spülperiode ausgesetzt wird, indem man ein Spülfluid durch einen Spülkanal in diesen Raum eintreten und diesen vollständig füllen läßt, wobei das Ende der Spülperiode einer Kalibrierung gewidmet ist, bei der das Spülfluid als Referenzfluid wirkt, woraufhin während der Messung das Ist-Meßsignal mit dem während der Kalibrierung gebildeten Referenzsignal verglichen wird.

2. Verfahren nach Anspruch 1,
dadurch gekennzeichnet,
daß die Lichtquelle eine IR-Lichtquelle ist.

3. Verfahren nach Anspruch 1,
dadurch gekennzeichnet,
daß die Lichtquelle eine UV-Lichtquelle ist.

4. Verfahren nach Anspruch 2 und 3,
gekennzeichnet durch
das Messen des Verhältnisses des Durchganges von UV-Licht zu IR-Licht, um den Prozentsatz an organischer Substanz zu bestimmen.

5. Verfahren nach Anspruch 2, 3 oder 4,
dadurch gekennzeichnet,
daß die Lichtquelle, die sowohl UV-Licht als auch IR-Licht emittiert, eine Halogen- oder Xenonlampe ist.

6. Verfahren nach einem der vorhergehenden Ansprüche,
gekennzeichnet durch
die Verwendung einer gepulsten Lichtstrahlung.

## Revendications

1. Procédé pour la détermination en continu des paramètres d'un fluide, tels que le pourcentage en matière sèche dans la boue dans un produit industriel, ce fluide étant soumis à un système de mesure comprenant une source lumineuse et un détecteur lumineux monté sur un support en forme de fourche en regard l'un de l'autre de façon à définir un espace de mesure, les signaux de mesure étant traités dans un circuit d'évaluation, après quoi les résultats de l'évaluation sont affichés sur des moyens d'affichage, le procédé comprenant les étapes consistant à immerger le support en forme de fourche dans le fluide, après quoi l'espace de mesure est soumis à une période de rinçage en laissant entrer un fluide de rinçage pour remplir la totalité de l'espace par l'intermédiaire d'un canal de rinçage, la fin de cette période de rinçage étant consacrée à l'étalonnage selon lequel ce fluide de rinçage agit comme fluide de référence, après quoi, pendant la mesure, le signal de mesure réel est comparé au signal de référence formé pendant l'étalonnage.

2. Procédé selon la revendication 1, caractérisé en ce que la source lumineuse est une source lumineuse infrarouge.

3. Procédé selon la revendication 1, caractérisé en ce que la source lumineuse est une source lumineuse ultraviolette.

4. Procédé selon la revendication 2 et 3, caractérisé en ce que l'on mesure le rapport de transmission de la lumière ultraviolette à la lumière infrarouge de façon à déterminer le pourcentage de matière organique.

5. Procédé selon la revendication 2, 3 ou 4, caractérisé en ce que la source lumineuse émettant à la fois la lumière ultraviolette et la lumière infrarouge et une lampe halogène ou xénon.

6. Procédé selon l'une quelconque des revendications précédentes, caractérisé par le fait d'utiliser une radiation à lumière pulsée.
